# EUROPÄISCHE PATENTSCHRIFT

(11) **EP 2 888 511 B1**
(45) Veröffentlichungstag und Bekanntmachung des Hinweises auf die Patenterteilung: **04.03.2020**
(21) Anmeldenummer: 13744959.1
(22) Anmeldetag: 10.07.2013
(51) Int. Cl.: F16H 63/20, F16H 61/24, F16H 63/30

(54) **SCHALTVORRICHTUNG EINES KRAFTFAHRZEUGWECHSELGETRIEBES**
SHIFTING DEVICE OF A MOTOR VEHICLE SPEED-CHANGE GEARBOX
DISPOSITIF DE PASSAGE DE VITESSE D'UNE BOÎTE DE VITESSES D'UN VÉHICULE AUTOMOBILE

(30) Priorität: 24.08.2012 DE 102012215125
(43) Veröffentlichungstag der Anmeldung: 01.07.2015
(73) Patentinhaber: Schaeffler Technologies AG & Co. KG, 91074 Herzogenaurach (DE)
(72) Erfinder: FEUERBACH, Matthias, 97070 Würzburg (DE); LÖFFELMANN, Jochen, 91330 Eggolsheim (DE)
(86) Internationale Anmeldenummer: PCT/DE2013/200035
(87) Internationale Veröffentlichungsnummer: WO 2014/029392

(56) Entgegenhaltungen:
- EP-A2- 1 808 620
- DE-A1- 10 207 192
- DE-A1-102008 060 364
- DE-A1-102010 046 160
- FR-A1- 2 887 949
- FR-A1- 2 892 788
- JP-A- 2007 270 946

## Beschreibung

### Gebiet der Erfindung

Die Erfindung betrifft eine Schaltvorrichtung eines Kraftfahrzeugwechselgetriebes nach dem Oberbegriff des Anspruchs 1 bzw. nach dem Oberbegriff des Anspruchs 2.

### Hintergrund der Erfindung

Schalteinrichtungen von Kraftfahrzeugzahnräderwechselgetrieben weisen eine kinematische Kette aus einzelnen in Wirkverbindung stehenden Bauelementen oder -gruppen auf. Die kinematische Kette beschreibt die Verbindung zwischen einem vom Fahrer betätigten Bedienerschalthebel und einem durch Betätigung des Bedienerschalthebels zu schaltenden Gangrad. In der Kette sind die Schaltbewegungen übertragenden Elemente, wie Seilzüge, Gestänge, Schaltwellen und Schaltschienen angeordnet. Weitere Elemente sind Arretiervorrichtungen, Sperren und Schiebemuffen. In der kinematischen Kette gibt es für eine vorgegebene Lage des Bedienerschalthebels nur eine Lage für jedes der anderen mit dem Bedienerschalthebel in Wirkverbindung stehenden Elemente. Jeder Lage eines Elements in der kinematischen Kette ist eine bestimmte Lage jedes anderen Elements der kinematischen Kette eindeutig zugeordnet.

Eine Schalteinrichtung eines Wechselgetriebes mit fünf Vorwärtsgängen und einem Rückwärtsgang ist in DE 31 25 632 C1 beschrieben. In einem Gehäuse des Wechselgetriebes ist eine Schaltwelle drehbar und axial verschiebbar gelagert. Die Schaltwelle ist mit einem Bedienerschalthebel verbunden. Auf der Schaltwelle ist ein radial von der Schaltwelle abstehender Schaltfinger an einer Hülse befestigt. Der Schaltfinger ist mittels der Schaltwelle zum Wechselgetriebe längs verschiebbar und um die Längsachse der Schaltwelle schwenkbar. Diese Bewegungen sind an der Schaltwelle durch den Bedienerschalthebel initiiert. In dem Wirkbereich des Schaltfingers sind drei Schaltelemente in Form von Schaltschienen angeordnet und durch Schaltstangen geführt. Die Schaltelemente sind durch eine Schwenkbewegung des Schaltfingers zu dem Wechselgetriebe längs verschiebbar angeordnet.

Jedes der Schaltelemente weist ein Schaltmaul auf. Mit einer Wählbewegung am Bedienerschalthebel wird der Schaltfinger längs in eines der Schaltmäuler eingefahren. Der Schaltfinger greift dabei in den freien Querschnitt des Schaltmauls ein, und die bewegliche Verbindung ist hergestellt. Der freie Querschnitt des Schaltmauls ist längs und damit in Verschieberichtung des Schaltelementes durch zwei den Schaltfinger zumindest teilweise zwischen sich nehmende Flanken begrenzt. Eine Schaltbewegung am Bedienerschalthebel bewirkt ein Schwenken des Schaltfingers, wobei der Schaltfinger jeweils die in Schwenkrichtung des Schaltfingers liegende Flanke in dem Schaltmaul beaufschlagt und das Schaltelement mit der Schaltgabel auf diese Weise längs verschiebt. Dieses Verschieben bewirkt über die Schaltgabel, in der Regel nach einer Synchronisation, das Kuppeln einer Schaltmuffe mit einem zu schaltenden Gangrad.

Bei Schalteinrichtungen von Zahnräderwechselgetrieben werden oftmals Maßnahmen ergriffen, die verhindern sollen, dass Vibrationen des verbrennungsmotorischen Antriebsstrangs über die kinematische Kette in den Innenraum des Fahrzeugs übertragen werden. Dazu schlägt DE 102 07 192 A1 beispielsweise vor, ein Spiel zwischen dem Schaltfinger und dem Schaltmaul vorzusehen. Eine weitere Schalteinrichtung mit einem Spiel zwischen Schaltfinger und Schaltmaul zeigt DE 10 2010 046 160 A1, wobei das Schaltmaul ringförmig ausgebildet ist. FR 2 887 949 A1 zeigt ebenfalls eine gattungsgemäße Schalteinrichtung. Um in der Neutralstellung das Spiel zu minimieren, aber dennoch zu bewahren, weist ein Schaltfinger Federn auf, mit denen er gegen Axialwände angefedert ist. Eine weitere Schalteinrichtung mit einem minimierten Spiel geht aus DE 10 2008 060 364 A1 hervor. Die Einstellung des Spiels und die damit ggf. verbundene Einstellung oder Zupaarung von Bauelementen ist für jede Schaltgasse erforderlich und dementsprechend aufwendig.

### Aufgabe der Erfindung

Der Erfindung liegt die Aufgabe zugrunde, eine unaufwendige und wirksame Entkopplung des Bedienerschalthebels vom Antriebsstrang zu schaffen.

Diese Aufgabe wird durch Schaltvorrichtungen mit den Merkmalen der Ansprüche 1 und 2 gelöst. Die Entkopplung des Bedienerschalthebels vom Antriebsstrang erfolgt erfindungsgemäß an lediglich einer Stelle, so dass nicht für jede Schaltgasse separate Entkopplungseinheiten vorgesehen werden müssen.

Die Entkopplung erfolgt in zumindest einer Ruhestellung, wobei unter Ruhestellung die Neutralstellung und die einzelnen Gangstellungen zu verstehen sind, also diejenigen Stationärstellungen, die längere Zeit eingenommen werden. Die Entkopplung erfolgt vollständig durch Beabstandung des Betätigungselements von dem Koppelelement in der Ruhestellung oder zumindest teilweise, indem diejenigen Flächenteile des Betätigungselements und des Koppelelements, die in der zumindest einen Ruhestellung wirksam koppeln, minimiert sind.

In den Stationärstellungen ist die Schaltvorrichtung typischerweise zusätzlich verrastbar. In Ausgestaltungen der Erfindung kann durch das Verrasten, durch eine Gassenführung oder eine andere Zwangsführung bewirkt werden, dass ein Beaufschlagen des Koppelelements durch das Betätigungselement nicht während der gesamten Schalt- oder Wählphase erforderlich sein muss.

Gemäß Anspruch 1 ist das Koppelelement in zumindest einer Ruhestellung von dem Betätigungselement beabstandet. Schwingungen des Koppelelements können somit in dieser Ruhestellung nicht auf das Betätigungselement übertragen werden.

In einer ersten Ausführung ist das Koppelelement in der Neutralstellung von dem Betätigungselement beabstandet. Die Neutralstellung ist typischerweise für längere Zeit dann vom Bediener gewählt, wenn sich der Motor im Leerlauf befindet. Niedrige Drehzahlen können bei einigen Getrieben, beispielsweise wenn die Leerlaufdrehzahl nahe der Resonanzfrequenz liegt, zu besonders spürbaren Anregungen führen. In diesem Fall ist eine bloße Entkopplung in der Neutralstellung ausreichend, da beim Gangeinlegen und Erhöhung der Motordrehzahl die Schwingungsamplituden merklich zurückgehen und daher eine Entkopplung in den geschalteten Gängen entbehrlich ist. Diese Art der Entkopplung lässt sich besonders einfach konstruktiv gestalten. Dazu kann das Betätigungselement in der Neutralstellung durch ein auf die maximale Resonanzamplitude abgestimmtes Spiel von dem zu betätigenden Koppelelement beabstandet sein.

In einer anderen Ausführung ist das Koppelelement von dem Betätigungselement in einigen, beispielsweise den geraden, den ungeraden oder in allen Schaltstellungen beabstandet. Ist der Gang geschaltet, kann somit das gesamte Drehzahlband durchfahren werden, ohne dass es zu merklichen Bewegungen des Schalthebels kommt. Dies erleichtert das Getriebedesign, da bei der Auslegung der Getriebekomponenten die Resonanzfrequenz auch in häufiger durchfahrene Drehzahlbereiche gelegt werden kann, ohne negative, haptische Rückmeldungen am Bedienerschalthebel zu erzeugen.

In einer Weiterbildung dieser Ausführung ist das Koppelelement als ein in Umfangsrichtung verlaufender Anschlag ausgebildet, der sobald die als Schaltwelle ausgebildete Schaltstange verdreht wird, mit dem Betätigungselement außer Eingriff gebracht wird. In den Schaltstellungen können durch den so verschwenkten Anschlag keine Schwingungen mehr auf das Betätigungselement übertragen werden. Eine Verschiebung in Wählrichtung kann bei der aus der Neutralgasse verdrehten Schaltwelle beispielsweise durch eine Schaltkulisse unterbunden werden.

In einer bevorzugten Ausführung ist das Koppelelement in allen Ruhestellungen von dem Betätigungselement beabstandet. Eine Koppelung erfolgt nur während der Gangschaltphase und damit ausschließlich dann, wenn sie funktionell erforderlich ist.

Das Koppelelement ist relativ zu dem Betätigungselement beweglich und kann dieses beaufschlagen. Es ist als ein druck- oder kraftbeaufschlagbarer Teil der Schaltwelle oder eines axial (für eine Entkopplung in Wählrichtung) oder radial fest (für eine Entkopplung in Schaltrichtung) mit der Schaltwelle verbundenen Bauteils ausgebildet. Das Koppelelement kann beispielsweise als einfacher Anschlag oder als ein Kugelkopf ausgebildet sein. Ist auf der Schaltwelle ein Bauteil fest angeordnet, das zusätzliche Funktionselemente wie eine Schalthülse trägt, ist das Koppelelement vorzugsweise auf diesem Bauteil angeordnet. Eine massive Schaltstange braucht dann nicht mit einem Anschlag, einer Ausnehmung oder einem weiteren Zusatzteil versehen werden, so dass diese nicht aufwendig bearbeitet oder geschwächt werden braucht.

In besonders bevorzugter Ausgestaltung weist eine Schalthülse an einer ihrer Stirnseiten einen Radialflansch als Koppelelement auf. Der Radialflansch kann beidseitig von einem U-förmigen und in Axialrichtung beweglichem Betätigungselement umgriffen sein.

In einer Ausführungsform ist das Betätigungselement in der Neutralstellung durch einen Spalt konstanter Breite von dem Koppelelement beabstandet. Somit ist in Schaltrichtung eine wirksame Entkopplung gewährleistet, und es können auch große Schaltkräfte über einen Flächenkontakt sicher übertragen werden. Der Spalt verläuft vorzugsweise senkrecht zur Axialrichtung der Schaltstange.

Eine Entkopplung erfolgt gem. einer Ausgestaltung der vorliegenden Erfindung dadurch, dass die Auflageflächen, mit denen sich das Betätigungselement und das Koppelelement in der Ruhestellung berühren, minimiert sind. Beispielsweise wirkt das schwenkbare Betätigungselement auf das Koppelelement über eine Kontaktfläche ein, deren wirksam koppelnder Anteil sich im Schaltverlauf ändert und - gemäß Anspruch 2 - in mindestens einer Ruhestellung minimiert ist. Dadurch wird zumindest eine teilweise Entkopplung erreicht. Diese Art der Entkopplung eignet sich besonders für Getriebe, bei denen bestimmte Schwingungsmoden im Getriebe besonders stark ausgeprägt sind. Über einen Linienkontakt, der zu diesen Schwingungsmoden orthogonal ist, kann die erforderliche Schaltkraft sicher übertragen werden, während die Übertragung von unerwünschten Schwingungen weitestgehend verhindert wird.

Die Schaltstange umfasst verdrehbare, nicht notwendigerweise runde Schaltwellen, die zusätzlich axial verschiebbar sein können, sowie Schaltschienen, die nur axial verschiebbar sind. Der Hebel kann als Schalthebel ausgebildet sein, der bewegt wird, sofern der Bediener einen Gang ein- oder auslegt (Schaltbewegung). Alternativ ist er als Wählhebel ausgebildet, der betätigt wird, sobald der Bediener eine bestimmte Gasse vorwählt (Wählbewegung).

Das Betätigungselement ist mit dem Hebel verbunden. In einer einfachen Ausgestaltung ist es fest mit diesem verbunden. In einer anderen Ausgestaltung ist das Betätigungselement über ein Lager an dem Hebel befestigt und bildet mit diesem eine Baueinheit. Das Lager stellt sicher, dass das Betätigungselement zu dem Hebel verkippen kann und damit in verschiedenen Drehwinkellagen des Hebels mit dem linear verschiebbaren Koppelelement einen ebenen Flächenkontakt ausbilden kann. Damit ist es nicht erforderlich, das Koppelelement und das Betätigungselement als Kugelkopf und den Kugelkopf umgreifende Kalotte auszubilden. Sie können daher als einfach zu fertigende, ebene Kontaktflächen ausgebildet sein.

In einer anderen Ausgestaltung ist das Betätigungselement um einen bestimmten Betrag drehbar an einem Hebel gelagert. Wird der Hebel betätigt, kann dadurch zunächst beim Drehen des planen Betätigungselements ein zunächst gleichbleibender Flächenkontakt mit dem Koppelelement sichergestellt werden. Bei Überschreiten eines bestimmten Drehwinkels kann das Betätigungselement nicht weiter verdrehen und beginnt zu verkippen. Die Kontaktfläche wird reduziert, und weniger Schwingungen werden übertragen. In Verbindung mit einer Rastierkontur, die das Gangeinlegen unterstützt, ist die Verminderung der zu übertragenden Schaltkraft tolerierbar. Nach Erreichen des Maximalwinkels sind das Betätigungselement und der Hebel drehfest gekoppelt, so dass sich bei weiterer Verdrehung der Flächenkontakt zum Koppelelement zu einem Linienkontakt wandelt, der weniger Vibrationen überträgt.

In einer weiteren Ausgestaltung der Erfindung weisen das Koppelelement, das Betätigungselement oder beide Elemente eine schwingungsdämpfende Beschichtung auf oder sind aus einem schwingungsdämpfenden Werkstoff hergestellt. Das erforderliche Spiel zwischen den beiden Bauteilen kann somit reduziert werden, ohne dass, Schwingungen fühlbar übertragen werden.

### Kurze Beschreibung der Zeichnungen

Im folgenden wird ein Ausführungsbeispiel der Erfindung anhand von Zeichnungen näher erläutert. Es zeigen:
- Figur 1: eine perspektivische Aufsicht auf eine erfindungsgemäße Schaltvorrichtung,
- Figur 2: den Teil der Schaltvorrichtung nach Figur 1, der die kinematische Kette beim Wählen bildet und
- Figur 3: eine vergrößerte Darstellung des Betätigungselements aus Figur 2.

### Ausführliche Beschreibung der Zeichnungen

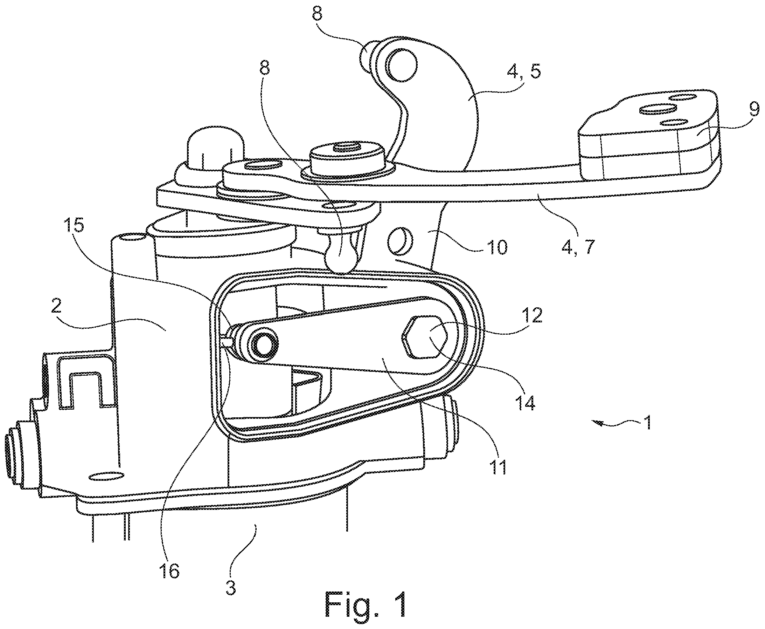

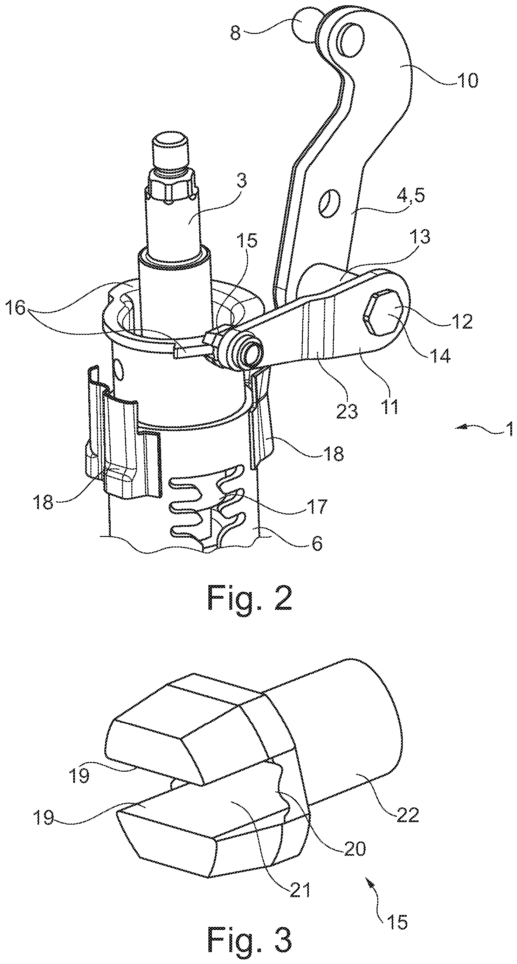

Die Figuren 1 und 2 zeigen eine Schaltvorrichtung 1 in Form eines Schaltdoms. Der Schaltdom umfasst ein Gehäuse 2, das mit einem nicht dargestellten Gehäuseteil zu einem Getriebegehäuse verschraubbar ist, eine Schaltstange 3, die als Schaltwelle ausgebildet und in dem Gehäuse 2 verdrehbar gelagert ist sowie zwei Hebel 4 zum Bewegen der Schaltstange 3.

Die Hebel 4 sind jeweils als ein Wählhebel 5, mit dem eine mit der Schaltstange 3 drehfest verbundene Hülse 6 translatorisch verschoben werden kann, und als ein Schalthebel 7 ausgebildet, der eine Verdrehung der Hülse 6 bewirkt. Die Hebel 4 sind jeweils mehrteilig ausgebildet und weisen jeweils einen Kugelkopf 8 zu ihrer Anlenkung über Seilzüge auf. Die Seilzüge sind mit dem Bedienerschalthebel verbunden.

Der Schalthebel 7 ist an seinem radial außen liegenden Ende mit einer Schaltmasse 9 versehen, die zur Glättung von Schaltkraftspitzen das Trägheitsmoment der Schaltvorrichtung 1 erhöht.

Der Wählhebel 5 weist einen außerhalb des Getriebegehäuses angeordneten Außenarm 10 und einen innerhalb des Getriebegehäuses angeordneten Innenarm 11 auf. Der Außenarm 10 und der Innenarm 11 sind über ein Sicherungsmittel 12 fest miteinander verbunden und an einer nicht dargestellten Durchführung am Gehäuse über ein den Außenarm 10 und den Innenarm 11 verbindendes Zwischenelement 13 gelagert.

Der Innenarm 11 ist um einen Drehpunkt 14 drehbar, der endseitig am Innenarm 11 angeordnet ist. An diesem endseitigen Ende ist der Innenarm 11 mit dem Zwischenelement 13 verbunden. An seinem anderen Ende weist er ein Betätigungselement 15 auf, über das die Drehbewegung auf ein mit der Hülse 6 verbundenes Koppelelement 16 in eine translatorische Bewegung übertragen wird.

Vorliegend ist das Koppelelement 16 als ein endseitiger Radialflansch der aus Blech umformtechnisch hergestellten Hülse 6 ausgebildet. Der Radialflansch als Teil der Hülse 6 ist drehfest zu weiteren auf der Hülse 6 angeordneten Schaltelementen wie einer Gassenführung 17, Rastierkonturen 18 und einem nicht dargestellten Schaltfinger angeordnet.

Der Radialflansch bildet keinen endseitigen, umlaufenden Bord, sondern ist abschnittsweise in dem Winkelbereich am Hülsenende ausgebildet, der beim Schalten überstrichen wird.

Gem. der Erfindung ist das Koppelelement 16 axial jeweils von Schenkeln 19 des U-förmig ausgebildeten Betätigungselements 15 eingefasst. Die Schenkel 19 bilden mit einem Boden als Nutgrund 20 die Begrenzungen einer Nut 21. Die Breite der Nut 21 ist größer als die Dicke des Blechs, aus dem der Radialflansch hergestellt ist. Die Hülse 6 und der Innenhebel 11 sind so zueinander angeordnet, dass in der Neutralstellung (Figur 2) der Radialflansch von beiden Schenkeln 19 durch einen Spalt 24 beabstandet ist. Die Schenkel 19 und das Koppelelement 16 sind so spielbehaftet, dass alle Schwingungen mit einer Schwingungsamplitude unterhalb eines vorzugebenden Werts sicher ausgefiltert werden. Die Nut 21 verläuft orthogonal zur Schaltstange 3, so dass die Schenkel 19 nur bei einem Wählvorgang und nicht bei einem Schaltvorgang beaufschlagt werden.

Das Betätigungselement 15 weist rückseitig zum Nutgrund 20 einen Zylinder 22 auf, mit dem es im Innenarm 11 verdrehbar gelagert ist. Durch die Lagerung kann das Betätigungselement 15 so verschwenken, dass beide Schenkel 19 in jeder Wählhebelstellung parallel zum Radialflansch ausgerichtet sind. Dadurch kann die Wählkraft stets sicher über einen Flächenkontakt übertragen werden. Zur weiteren Reduzierung der Körperschallübertragung weist der Nutgrund 20 einen nicht ebenen Verlauf auf. Von dem Radialflansch ist er in Neutralstellung zusätzlich beabstandet.

Ebenfalls zur Reduzierung der Vibrationen sind die Schenkel 19 des Betätigungselements 15 mit einer schwingungsdämpfenden Beschichtung versehen.

Zusätzlich oder stattdessen können der Zylinder 22 oder andere Lagerteile mit einer schwingungsdämpfenden Beschichtung versehen sein.

Der Innenarm 11 des Wählhebels 5 ist so ausgestaltet, dass der Schaltdom möglichst kompakt baut. Dazu ist der Innenarm 11 an dem Ende, das seinem Drehpunkt abgewandt ist verjüngt, so dass die überstrichene Fläche beim Wählen verringert ist. Zu seiner Versteifung weist er eine Kröpfung 23 auf.

**Liste der Bezugszahlen**

| | | | |
|---|---|---|---|
| | | 23 | Kröpfung |
| 1 | Schaltvorrichtung | 24 | Spalt |
| 2 | Gehäuse | | |
| 3 | Schaltstange | | |
| 4 | Hebel | | |
| 5 | Wählhebel | | |
| 6 | Hülse | | |
| 7 | Schalthebel | | |
| 8 | Kugelkopf | | |
| 9 | Schaltmasse | | |
| 10 | Außenarm | | |
| 11 | Innenarm | | |
| 12 | Sicherungsmittel | | |
| 13 | Zwischenelement | | |
| 14 | Drehpunkt | | |
| 15 | Betätigungselement | | |
| 16 | Koppelelement | | |
| 17 | Gassenführung | | |
| 18 | Rastierkontur | | |
| 19 | Schenkel | | |
| 20 | Nutgrund | | |
| 21 | Nut | | |
| 22 | Zylinder | | |

## Patentansprüche

1. Schaltvorrichtung (1) eines Kraftfahrzeugwechselgetriebes mit
- einer Schaltstange (3),
- einem schwenkbaren Hebel (4, 5), der ein Betätigungselement (15) aufweist, über welches die Schaltstange (3) translatorisch verschiebbar ist und
- einem axial fest an der Schaltstange (3) angeordneten Koppelelement (16), an dem das Betätigungselement (15) angreift,
wobei in zumindest einer Ruhestellung des schwenkbaren Hebels (4, 5), wobei unter Ruhestellung die Neutralstellung und die einzelnen Gangstellungen des Kraftfahrzeugwechselgetriebes zu verstehen sind, das Betätigungselement (15) von dem Koppelelement (16) beabstandet ist **dadurch gekennzeichnet, dass** das Betätigungselement (15) zwei Schenkel (19) aufweist, die das Koppelelement (16) umgreifen.

2. Schaltvorrichtung (1) eines Kraftfahrzeugwechselgetriebes mit
- einer Schaltstange (3),
- einem schwenkbaren Hebel (4, 5), der ein Betätigungselement (15) aufweist, über welches die Schaltstange (3) translatorisch verschiebbar ist und
- einem axial fest an der Schaltstange (3) angeordneten Koppelelement (16), an dem das Betätigungselement (15) angreift,
wobei in zumindest einer Ruhestellung des schwenkbaren Hebels (4, 5), wobei unter Ruhestellung die Neutralstellung und die einzelnen Gangstellungen des Kraftfahrzeugwechselgetriebes zu verstehen sind, das Betätigungselement (15) und das Koppelelement (16) eine Kontaktfläche aufweisen, die in Bezug auf die möglichen Stellungen des Betätigungselements (15) minimal ist,
**dadurch gekennzeichnet, dass** das Betätigungselement (15) zwei Schenkel (19) aufweist, die das Koppelelement (16) umgreifen.

3. Schaltvorrichtung nach Anspruch 1, **dadurch gekennzeichnet, dass** in der Neutralstellung das Betätigungselement (15) von dem Koppelelement (16) durch einen Spalt beabstandet ist.

4. Schaltvorrichtung nach einem der vorhergehenden Ansprüche, **dadurch gekennzeichnet, dass** das Koppelelement (16) an einer axial fest mit der Schaltstange (3) verbundenen Hülse (6) angeordnet ist.

5. Schaltvorrichtung nach Anspruch 1, **dadurch gekennzeichnet, dass** das Koppelelement (16) als ein Radialflansch ausgebildet ist.

6. Schaltvorrichtung nach Anspruch 1 oder 5, **dadurch gekennzeichnet, dass** das Betätigungselement (15) eine Nut (21) zum Eingriff des Koppelelements (16) aufweist, wobei der Nutgrund (20) uneben ausgebildet ist.

7. Schaltvorrichtung nach einem der vorhergehenden Ansprüche, **dadurch gekennzeichnet, dass** das Betätigungselement (15) drehbar am Hebel (4, 5) gelagert ist.

8. Schaltvorrichtung nach einem der vorhergehenden Ansprüche, **dadurch gekennzeichnet, dass** das Betätigungselement (15) beschichtet oder aus einem Gleitwerkstoff ausgebildet ist.

9. Schaltdom mit einer Schaltvorrichtung nach einem der vorhergehenden Ansprüche, wobei der Hebel (4) als ein Wählhebel (5) ausgebildet ist.

## Claims

1. Shifting device (1) of a motor vehicle speed-change gearbox having
- a shift rod (3),
- a pivotable lever (4, 5) which has an activation element (15) by means of which the shift rod (3) can be shifted in a translatory fashion, and
- a coupling element (16) which is arranged in an axially fixed fashion on the shift rod (3) and on which the activation element (5) engages, wherein
the activation element (15) is spaced apart from the coupling element (16) in at least one position of rest of the pivotable lever (4, 5), wherein the position of rest is to be understood as the neutral position and the individual gear speed positions of the motor vehicle speed-change gearbox, **characterized in that** the activation element (15) has two limbs (19) which engage around the coupling element (16).

2. Shifting device (1) of a motor vehicle speed-change gearbox having
- a shift rod (3),
- a pivotable lever (4, 5) which has an activation element (15) by means of which the shift rod (3) can be shifted in a translatory fashion, and
- a coupling element (16) which is arranged in an axially fixed fashion on the shift rod (3) and on which the activation element (15) engages,
wherein, in at least one position of rest of the pivotable lever (4, 5), wherein the position of rest is to be understood as the neutral position and the individual gear speed positions of the motor vehicle speed-change gearbox, the activation element (15) and the contact element (16) have a contact face which is minimal with respect to the possible positions of the activation element (15),
**characterized in that** the activation element (15) has two limbs (19) which engage around the coupling element (16) .

3. Shifting device according to Claim 1, **characterized in that** in the neutral position the activation element (15) is spaced apart from the coupling element (16) by a gap.

4. Shifting device according to one of the preceding claims, **characterized in that** the coupling element (16) is arranged on a sleeve (6) which is connected in an axially fixed fashion to the shift rod (3).

5. Shifting device according to Claim 1, **characterized in that** the coupling element (16) is embodied as a radial flange.

6. Shifting device according to Claim 1 or 5, **characterized in that** the activation element (15) has a groove (21) for the coupling element (16) to engage in, wherein the groove base (20) is embodied in an uneven fashion.

7. Shifting device according to one of the preceding claims, **characterized in that** the activation element (15) is rotatably mounted on the lever (4, 5).

8. Shifting device according to one of the preceding claims, **characterized in that** the activation element (15) is embodied in a coated fashion or from a sliding material.

9. Gearshift dome having a shifting device according to one of the preceding claims, wherein the lever (4) is embodied as a selector lever (5).

## Revendications

1. Dispositif de changement de vitesse (1) d'une boîte de vitesse de véhicule automobile, ledit dispositif comprenant
- une barre de changement de vitesse (3),
- un levier pivotant (4, 5) qui comporte un élément d'actionnement (15) permettant de faire coulisser en translation la barre de changement de vitesse (3) et
- un élément d'accouplement (16) qui est disposé de manière axialement fixe sur la barre de changement de vitesse (3) avec lequel s'engage l'élément d'actionnement (15),
l'élément d'actionnement (15) étant espacé de l'élément d'accouplement (16) dans au moins une position de repos du levier pivotant (4, 5), la position de repos étant comprise comme étant la position neutre et les positions de marche individuelles de la boîte de vitesses de véhicule automobile, **caractérisé en ce que** l'élément d'actionnement (15) comporte deux branches (19) qui entourent l'élément d'accouplement (16).

2. Dispositif de changement de vitesse (1) d'une boîte de vitesses de véhicule automobile, ledit dispositif comprenant
- une barre de changement de vitesse (3),
- un levier pivotant (4, 5) qui comporte un élément d'actionnement (15) permet de faire coulisser en translation la barre de changement de vitesse (3) et
- un élément d'accouplement (16) qui est disposé de manière axialement fixe sur la barre de changement de vitesse (3) et avec lequel s'engage l'élément d'actionnement (15),
l'élément d'actionnement (15) et l'élément d'accouplement (16) présentant dans au moins une position de repos du levier pivotant (4, 5), la position de repos étant comprise comme étant la position neutre et les positions de marche individuelles de la boîte de vitesses de véhicule automobile, une surface de contact qui est minimale par rapport aux positions de l'élément d'actionnement (15), **caractérisé en ce que** l'élément d'actionnement (15) comporte deux branches (19) qui entourent l'élément d'accouplement (16).

3. Dispositif de changement de vitesse selon la revendication 1, **caractérisé en ce que**, dans la position neutre, l'élément d'actionnement (15) est espacé de l'élément d'accouplement (16) par un intervalle.

4. Dispositif de changement de vitesse selon l'une des revendications précédentes, **caractérisé en ce que** l'élément d'accouplement (16) est disposé sur un manchon (6) relié de manière axialement fixe à la barre de changement de vitesse (3).

5. Dispositif de changement de vitesse selon la revendication 1, **caractérisé en ce que** l'élément d'accouplement (16) est réalisé sous forme d'une bride radiale.

6. Dispositif de changement de vitesse selon la revendication 1 ou 5, **caractérisé en ce que** l'élément d'actionnement (15) comporte une gorge (21) destinée à l'engagement de l'élément d'accouplement (16), le fond (20) de la gorge étant irrégulier.

7. Dispositif de changement de vitesse selon l'une des revendications précédentes, **caractérisé en ce que** l'élément d'actionnement (15) est monté à rotation sur le levier (4, 5).

8. Dispositif de changement de vitesse selon l'une des revendications précédentes, **caractérisé en ce que** l'élément d'actionnement (15) est pourvu d'un revêtement ou est formé d'un matériau de glissement.

9. Dôme de changement de vitesse comprenant un dispositif de changement de vitesse selon l'une des revendications précédentes, le levier (4) étant conçu comme un levier sélecteur (5).
